# EUROPEAN PATENT APPLICATION

(11) **EP 4 614 238 A1**
(43) Date of publication of application: **10.09.2025**
(21) Application number: 25157383.8
(22) Date of filing: 12.02.2025
(51) Int. Cl.: G03G 15/08, G03G 15/00

(54) **MEASURING SYSTEM FOR MEASURING THE LEVEL OF TONER IN A CARTRIDGE FOR LASER PRINTER**

(30) Priority: 07.03.2024 IT 202400005122
(71) Applicant: STMicroelectronics International N.V., 1228 Plan-les-Ouates, Geneva (CH)
(72) Inventor: GUADALUPI, Carlo, 20018 SEDRIANO (MI) (IT); RIVOLTA, Stefano Paolo, 20832 DESIO (MB) (IT); LABOMBARDA, Andrea, 20155 Milano (IT)
(74) Representative: Studio Torta S.p.A.

(57) **Abstract**

Measuring system (50) for a cartridge (10) for laser printer (40), the measuring system (50) being configured to be coupled to an external body (14) of the cartridge (10) and comprising: an acceleration sensor (52) configured to measure vibrations of the cartridge (10) generated by rotating elements (20, 22, 24) of the cartridge (10); and a charge variation sensor (54) configured to measure electrostatic charge variations generated by movements of the toner (12) in the cartridge (10). The measuring system (50) further comprises a control unit (56) configured to: receive from the acceleration sensor (52) an acceleration signal indicative of the measured vibrations, and from the charge variation sensor (54) a charge variation signal indicative of the measured electrostatic charge variations; determine feature parameters as a function of the acceleration signal and the charge variation signal, the feature parameters comprising a peak-to-peak distance (Aₚₚ) of the acceleration signal and a maximum (Cₘ) of the charge variation signal; and generate, on the basis of the feature parameters, a level signal indicative of the level of the toner (12) in the cartridge (10).

## Description

### TECHNICAL FIELD

The present invention relates to a measuring system for measuring the level of toner in a cartridge for laser printer. Furthermore, it relates to a cartridge comprising the measuring system, to a laser printer comprising the cartridge, to a measuring method implemented by the measuring system and to a corresponding computer program product.

### STATE OF THE ART

Laser printers are a known and now widespread technology for printing on sheets of paper.

In particular, laser printing uses toner as a pigment, contained in a powder state in a cartridge present in the laser printer.

The image to be reproduced, coming from a paper or electronic support, is imprinted by a laser onto a selenium cylinder made photosensitive, referred to as "OPC drum", which is electrically charged with the light radiation in such a way as to acquire the image in a negative manner and to transfer the toner onto the paper, where the latter is then fixed by fusion.

Accurately detecting the amount of toner present in the cartridge is therefore a critical action to ensure the correct functioning of the laser printer. In fact, this allows the user to always be informed about the actual level of toner available for printing, so as to allow the cartridge to be replaced in the most suitable manner (i.e. only when the toner is almost exhausted, in order to minimize waste and costs, but at the same time without the risk of not having the spare part available when necessary).

Several known solutions are currently available to measure the level of the toner in the cartridge. For example, it is known to use an inductive sensor for detecting the level of toner powder.

However, the known solutions do not ensure accurate and reliable measurements (in particular, several critical issues are known in their production which may cause issues in the final product) and usually do not allow the level of toner to be detected precisely (generally the measured level is indicated to the user as "full", "medium" or "low").

Document US2022221807A1 relates to an image forming apparatus for forming an image on a recording medium, a cartridge detachably mountable to an apparatus main assembly of the image forming apparatus, and a detecting method of vibration of the cartridge.

Document JP2014106357A relates to an image forming apparatus capable of detecting a storage amount of a developer stored in a developer storage portion according to a vibration of the developer storage portion and a detection method thereof.

Document US2022276581A1 relates generally to an image forming apparatus and a toner cartridge.

Document US2007206966A1 relates to an image forming apparatus, particularly with a detachably mountable cartridge of an electrophotographic system such as a laser beam printer, a copying machine, a facsimile, or a multifunction printer in a combination of these. Further, it relates to a method of detecting the remaining amount of developer contained in a developing device that develops an electrostatic latent image formed on an electrophotographic photosensitive member through such image forming apparatus.

Document EP0936508B1 relates to electrophotographic printers, such as laser printers and copiers, and in particular to a technique for measuring the toner quantity in such a printer.

Document EP4174580A1 relates to the field of image-forming technology and, more particularly, to a toner cartridge, a method for detecting a remaining toner amount, and an image-forming apparatus.

Document EP0992866A2 relates to an electrophotographic image forming apparatus, a process cartridge, a developing device and a measuring part.

### SUMMARY OF THE INVENTION

The aim of the present invention is to provide a measuring system, a cartridge, a laser printer, a measuring method and a corresponding computer program product, which overcome the drawbacks of the prior art.

According to the present invention, a measuring system, a cartridge, a laser printer, a measuring method and a corresponding computer program product are provided, as defined in the annexed claims which form an integral part of the present description.

### BRIEF DESCRIPTION OF THE DRAWINGS

For a better understanding of the present invention, a preferred embodiment is now described, purely by way of non-limiting example, with reference to the attached drawings, wherein:
- Figure 1 is a schematic cross-sectional view of a cartridge for a laser printer, according to one embodiment;
- Figure 2 is a perspective schematic view, in ghost, of a laser printer comprising the cartridge of Figure 1, according to one embodiment;
- Figure 3 is a block diagram schematically showing details of a measuring system for measuring the level of toner of the cartridge of Figure 1, according to one embodiment;
- Figure 4 is a block diagram that schematically shows classification criteria for measuring the level of toner of the cartridge of Figure 1, according to one embodiment;
- Figure 5 shows an example of a confusion matrix obtained through the classification criteria of Figure 4; and
- Figure 6 is a block diagram that schematically shows a measuring method performed by the measuring system of Figure 3, according to one embodiment.

In the following description, elements common to the different embodiments have been indicated with the same reference numbers.

### DETAILED DESCRIPTION OF THE INVENTION

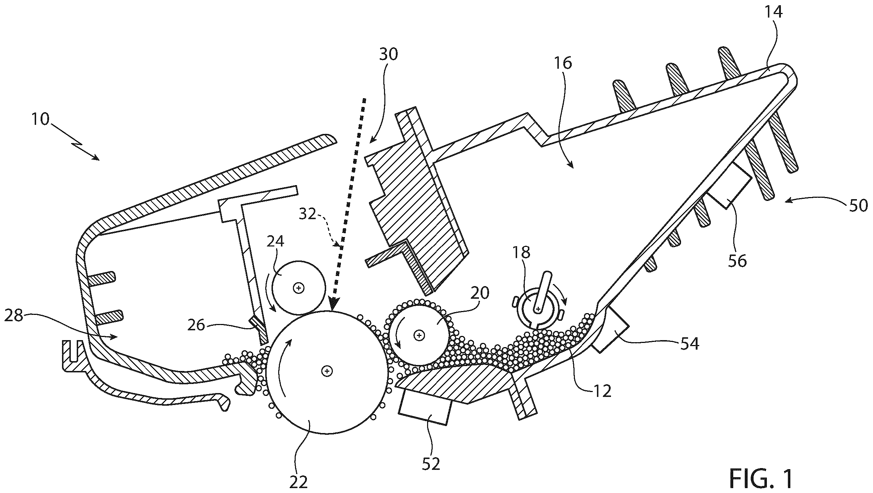

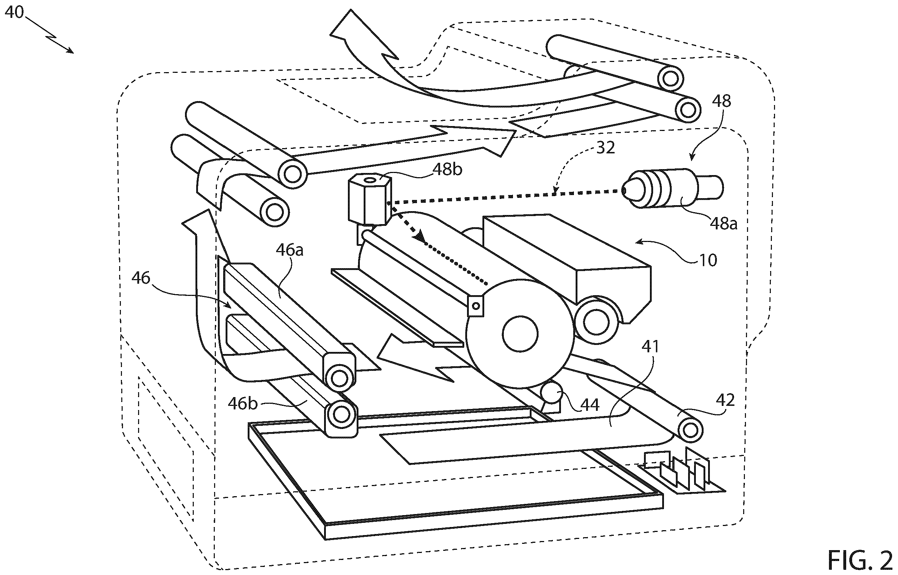

Figure 1 shows a cartridge 10 for a laser printer, shown in Figure 2 with the reference 40.

The cartridge 10 is configured to contain the toner 12, in particular powder of toner 12, which in use is used to print on the sheet of paper.

The general structure of the cartridge 10 is of a known type.

In particular, the cartridge 10 comprises an external body 14 (e.g. a container) which accommodates elements such as a toner hopper 16, an agitator bar 18, a developer roller 20, an OPC drum 22, a primary charge roller (PCR) 24, a wiper blade 26 and a waste bin 28.

The toner hopper 16 contains the toner 12 to be used for printing. In detail, the powder of toner 12 is kept in movement inside the toner hopper 16 through the agitator bar 18, also present inside the toner hopper 16 and configured to rotate in such a way as to continuously move the toner 12.

The developer roller 20 is positioned in an opening of the toner hopper 16 and is interposed between the toner hopper 16 and the OPC drum 22. Rotating axially in a controlled manner, the developer roller 20 allows the selective transfer of the toner 12 onto the OPC drum 22.

The PCR 24 is in contact with the OPC drum 22 and is configured to negatively charge an external photosensitive surface of the OPC drum 22, whereon the toner 12 is then transferred through the developer roller 20.

Through a laser opening 30 present in the external body 14, a laser beam 32 may enter the external body 14 and impinge on the OPC drum 22, in such a way as to imprint, on the external photosensitive surface of the OPC drum 22, an image which is the negative of the image to be printed. In particular, this prevents the toner 12 from adhering to the external photosensitive surface of the OPC drum 22 at the hidden image.

Furthermore, the wiper blade 26 is in contact with the OPC drum 22 in such a way as to remove any residues of the toner 12 which may have remained erroneously stuck to the OPC drum 22 after the contact of the latter with the sheet to be printed, without therefore having been transferred to the sheet. These residues of the toner 12 detached through the wiper blade 26 end up in the waste bin 28, having the wiper blade 26 faced thereto.

In use and in a per se known manner, laser printing comprises the following steps in succession to each other.

A static charging step of the OPC drum 22 is performed through the PCR 24. In detail, a continuous flow of electrical current coming from the PCR 24 generates a negative charge state on the photosensitive surface of the OPC drum 22.

In an exposure step, the laser beam 32 scans the surface of the OPC drum 22 removing the negative charge in the areas that will not have to be printed, i.e. whereon the toner 12 will not have to stick in the subsequent development step. Accordingly, at this point a hidden image, equal to the reproduction in a negative manner of the image to be printed on the sheet, is present on the surface of the OPC drum 22.

In the development step the deposition of the powder of toner 12 is performed on the hidden image of the OPC drum 22. The powder of toner 12, coming from the toner hopper 16, is electrically attracted to the OPC drum 22 and sticks to the areas remained sensitive to the negative charge.

In a transfer step, the OPC drum 22 slides on the sheet, which is electrically charged in a positive manner by a transfer roller of the laser printer 40, to cause the toner 12 to be attracted by the sheet of paper and transferred thereon creating the image to be printed.

In a fusion step, the particles of toner 12 placed on the sheet of paper are fused thereon. In detail, the sheet of paper is passed through a part of the laser printer 40 referred to as "fusion unit", comprising an upper fuser roller and a lower pressure roller. The lower pressure roller compresses the sheet onto the upper fuser roller, which is heated in such a way as to fuse the toner 12 sticking it to the paper.

In a subsequent cleaning step, the toner 12 remaining on the OPC drum 22 after the passage of the sheet of paper is cleaned away to allow the machine to repeat the printing process.

Finally, in an erasing step, the cartridge 10 erases the traces of negative charge still present on the developer roller 20.

Figure 2 shows the laser printer 40, comprising the cartridge 10 and further elements that are known and therefore not described in detail, such as a drive roller 42 which carries the sheet to be printed (here indicated with the reference 41) to the cartridge 10, the transfer roller 44 which electrically charges in a positive manner the sheet 41 at where the latter contacts the OPC drum 22, the fusion unit 46 with the upper fuser roller 46a and the lower pressure roller 46b for fusing the toner 12 to the sheet 41, and a laser assembly 48 which comprises a laser emitter 48a for emitting the laser beam 32 and a rotating mirror 48b to direct the laser beam 32 into the laser opening 30 of the cartridge 10.

As previously described, the cartridge 10 has several rotating elements, i.e. which in use rotate for example in an axial manner around respective rotation axes (e.g., the OPC drum 22, the developer roller 20, the PCR 24, etc.). Accordingly, the cartridge 10 is configured to generate vibrations during its use, which are measurable.

Furthermore, due to its rotation, the agitator bar 18 generates, in use, a movement of the particles of toner 12 in order to prevent them from compacting with each other and then making it difficult for them to transfer towards the OPC drum 22. However, since the toner 12 contains about 5-6% of ferromagnetic material (e.g., iron oxide), it has been verified that the movement of the toner 12 through the agitator bar 18 generates an electrostatic charge variation which is also measurable.

In particular, and as better described below, the Applicant has verified that the vibrations and the electrostatic charge variations generated by the cartridge 10 are correlated to the amount of toner 12 present in the toner hopper 16. Accordingly, the level of toner 12 in the cartridge 10 may be measured by analyzing the measurements of vibration and electrostatic charge variation generated by the cartridge 10.

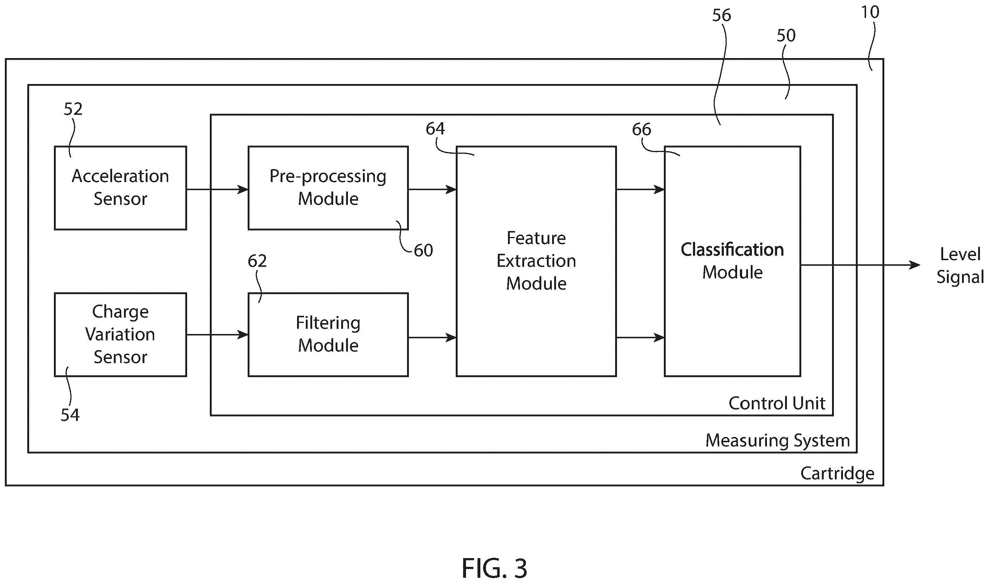

For this purpose, and as better shown in Figure 3, the cartridge 10 comprises a measuring system 50 for measuring the level of the toner 12 in the cartridge 10.

The measuring system comprises an acceleration sensor 52 and a charge variation sensor 54.

The acceleration sensor 52 comprises an accelerometer, for example a triaxial accelerometer, configured to measure accelerations corresponding to the vibrations generated, in use, by the rotating elements of the cartridge 10.

In particular, the acceleration sensor 52 generates, in use, an acceleration signal indicative of the vibrations generated by the cartridge 10. For example, the acceleration signal comprises, at each instant, a respective acceleration value for each acceleration component measured by the acceleration sensor 52, i.e. a respective acceleration value for each of the measuring axes of the accelerometer.

For illustrative and non-limiting purposes, the acceleration sensor 52 may comprise an accelerometer LIS2DUXS12 of the present Applicant, for example with an "output data rate" (ODR) equal to about 200 Hz.

In detail, the acceleration sensor 52 is carried by the external body 14 of the cartridge 10, i.e. it is fixed thereto. For example, the acceleration sensor 52 is arranged externally to the external body 14, i.e. it is fixed to an external surface of the external body 14.

In greater detail, the acceleration sensor 52 is fixed to a region of the external body 14 of the cartridge 10 which is placed at the rotating elements of the cartridge 10 (e.g., at the OPC drum 22). For example, the region of the external body 14 having the acceleration sensor 52 fixed thereto is the part of the external body 14 that is closest to the rotating elements of the cartridge 10. This is exemplarily shown in Figure 1.

The charge variation sensor 54 is configured to measure the charge variations, in detail electrostatic charge, generated by the movement of the toner 12 due to the agitator bar 18.

In particular, the charge variation sensor 54 generates, in use, a charge variation signal indicative of the electrostatic charge variations generated by the cartridge 10.

For illustrative and non-limiting purposes, the charge variation sensor 54 may comprise a LIS2DUXS12 of the present Applicant, for example with an "output data rate" (ODR) equal to about 200 Hz.

In detail, the charge variation sensor 54 is carried by the external body 14 of the cartridge 10, i.e. it is fixed thereto. For example, the charge variation sensor 54 is arranged externally to the external body 14, i.e. it is fixed to the external surface of the external body 14.

In greater detail, the charge variation sensor 54 is fixed to a region of the external body 14 of the cartridge 10 which is placed at the toner hopper 16 and, more in detail, at the agitator bar 18. For example, the region of the external body 14 having the charge variation sensor 54 fixed thereto is the part of the external body 14 which is closest to the agitator bar 18 of the cartridge 10. This is exemplarily shown in Figure 1.

In detail, the charge variation sensor 54 comprises one or more electrodes (not shown). Hereinafter, reference is exemplarily made to the case of an electrode.

The electrode of the charge variation sensor 54 is placed in the cartridge 10 as previously described. In detail, the electrode is arranged facing the toner hopper 16 and may be electrically shielded towards the outside of the cartridge 10 (e.g., a metal part of the electrode extends between the external body 14 and an insulating layer that electrically insulates the electrode from the environment surrounding the cartridge 10, making it sensitive exclusively, or in any case mainly, to electrostatic charge variations generated by the cartridge 10).

In use, the electrode detects the electrostatic charge variations and generates the corresponding charge variation signal indicative of the measured electrostatic charge variations.

Furthermore, the measuring system 50 comprises a control unit 56 configured to receive the acceleration signal from the acceleration sensor 52 and the charge variation signal from the charge variation sensor 54 and, on the basis of the acceleration signal and the charge variation signal, generate a level signal indicative of the level of the toner 12 in the cartridge 10 (in detail, of the amount of toner 12 present in the toner hopper 16 and available for printing).

Hereinafter the case in which the control unit 56 is external to the acceleration sensor 52 and to the charge variation sensor 54 and is operationally coupled (in detail, electrically coupled) to the acceleration sensor 52 and to the charge variation sensor 54 is exemplarily considered. This case is shown in Figure 3.

However, according to a different embodiment the control unit 56 may be a control unit integrated in the acceleration sensor 52 and/or in the charge variation sensor 54. For example, the control unit 56 may be internal to the acceleration sensor 52 and may be operationally coupled to the charge variation sensor 54 in order to acquire the charge variation signal from the latter. This allows the potentialities of the electronic circuitry included in modern sensors to be fully exploited, without the need to use a control unit external to the sensors.

The control unit 56 is an electronic unit (such as a CPU, a microprocessor, a microcontroller or a dedicated calculation unit) which may comprise, coupled to each other, units of a known type and not shown such as: an interface unit to interface the acceleration sensor 52 and the charge variation sensor 54 with the control unit 56 (e.g., comprising an amplification stage and/or an analog-to-digital converter, ADC, stage); a processing unit for processing signals from the acceleration sensor 52 and the charge variation sensor 54; and a data storage unit (such as a memory, e.g. a non-volatile memory) for storing the acquired data.

In detail, the control unit 56 is carried by the external body 14 of the cartridge 10, i.e. it is fixed thereto. For example, the control unit 56 is arranged externally to the external body 14, i.e. it is fixed to the external surface of the external body 14. This is exemplarily shown in Figure 1. Furthermore, and in a manner not shown, the control unit 56 may be coupled to the acceleration sensor 52 and to the charge variation sensor 54 through electrical connections (e.g., electrical cables).

As shown in Figure 3, the control unit 56 (e.g., the processing unit of the control unit 56) comprises: a pre-processing module 60 (optional), a filtering module 62 (optional), a feature extraction module 64 and a classification module 66.

The pre-processing module 60 is coupled to the acceleration sensor 52 to receive the acceleration signal from the latter. The pre-processing module 60 is configured to pre-process the acceleration signal, in detail calculating at each acquisition instant of the acceleration signal a respective norm of the acceleration values considered on the measuring axes of the accelerometer in such a way as to have the (pre-processed) acceleration signal which is independent of the position and spatial orientation of the acceleration sensor 52.

The filtering module (also referred to as charge variation filtering module) 62 is coupled to the charge variation sensor 54 to receive the charge variation signal from the latter. The filtering module 62 is configured to filter the charge variation signal, in particular through a band-pass filter having a lower cut-off frequency comprised between about 0.1 Hz and about 1 Hz and for example equal to about 0.5 Hz and an upper cut-off frequency comprised between about 5 Hz and about 20 Hz and for example equal to about 5 Hz. In this manner the (filtered) charge variation signal does not depend on factors such as charge variations induced by the power supply at 50 Hz or 60 Hz present in closed environments such as the interiors of buildings or used to power the printer 40.

The feature extraction module 64 is coupled to the pre-processing module 60 and to the filtering module 62 to receive from the latter the acceleration signal (pre-processed) and the charge variation signal (filtered), respectively. The feature extraction module 64 is configured to generate feature parameters indicative of features of the acceleration signal and the charge variation signal.

For illustrative and non-limiting purposes, the features considered are one or more of the following features: mean, variance, energy, "zero cross", "peak detector", peak-to-peak distance, minimum, maximum. For example, variance, "zero cross", "peak detector" and peak-to-peak distance may be used for the acceleration signal; mean, "peak detector", peak-to-peak distance, minimum, maximum may be used for the charge variation signal. In the considered case wherein both the acceleration signal and the charge variation signal are used, the peak-to-peak distance may be used for the acceleration signal and the maximum may be used for the charge variation signal, as well as possibly also other features that have been previously cited for the two signals.

Accordingly, the feature extraction module 64 is configured to calculate the chosen features of the acceleration signal and the charge variation signal and to generate the feature parameters accordingly.

For example, the calculation of the features may be done on the basis of the acquisition of a few hundred samples of the acceleration signal and the charge variation signal (e.g., about 255), considering the ODR of the acceleration sensor 52 and the charge variation sensor 54 equal to about 200 Hz.

The classification module 66 is coupled to the feature extraction module 64 to receive from the latter the feature parameters of the acceleration signal and the charge variation signal. The classification module 66 is configured to generate the level signal on the basis of the feature parameters of the acceleration signal and the charge variation signal, therefore it is configured to determine the level of the toner 12 in the cartridge 10 as a function of the feature parameters.

In detail, the level signal may assume a value comprised between a plurality of predefined values corresponding to a respective plurality of predefined levels of toner 12 in the cartridge 10 (in detail, in the toner hopper 16). For example, the value of the level signal may vary between five possible predefined values, for example equal to 0%, 25%, 50%, 75%, and 100%. Each of these values identifies a respective level class to which the amount of toner 12 detected through the acceleration signal and the charge variation signal may belong. For example, if the acceleration signal and the charge variation signal are indicative of a percentage amount (e.g., x) of toner 12 in the toner hopper 16 comprised in a first variation range (e.g., 0% ≤x<12.5%), then the level signal assumes a first value (e.g., 0%) indicative of a first level class; if the percentage amount is comprised in a second variation range (e.g., 12.5%≤x<37.5%), then the level signal assumes a second value (e.g., 25%) indicative of a second level class; if the percentage amount is comprised in a third variation range (e.g., 37.5%≤x<62.5%), then the level signal assumes a third value (e.g., 50%) indicative of a third level class; if the percentage amount is comprised in a fourth variation range (e.g., 62.5%≤x<87.5%), then the level signal assumes a fourth value (e.g., 75%) indicative of a fourth level class; and if the percentage amount is comprised in a fifth variation range (e.g., 87.5%≤x≤100%), then the level signal assumes a fifth value (e.g., 100%) indicative of a fifth level class.

In detail, the classification module 66 generates, in use, the level signal on the basis of the feature parameters using machine learning or artificial intelligence techniques. In detail, the classification module 66 implements a classification algorithm, for example a "random forest" (RF) classifier, a "decision tree" (DT) classifier, or a "support vector machine" (SVM) classifier, etc. Hereinafter the case in which the classification module 66 implements a DT classifier is exemplarily considered.

The classifier is trained in a supervised manner and according to per se known techniques in order to recognize, given the features parameters received at input, which of the predefined level classes the measurement carried out belongs to, so as to choose the value of the level signal accordingly.

For example, in case only the acceleration signal is used (not part of the present invention but disclosed for illustrative purposes), the DT classifier may have a number of leaves equal to about 6 and a tree size equal to about 11; in case only the charge variation signal is used (not part of the present invention but disclosed for illustrative purposes), the DT classifier may have a number of leaves equal to about 11 and a tree size equal to about 21; and in case both the acceleration signal and the charge variation signal are used, the DT classifier may have a number of leaves equal to about 6 and a tree size equal to about 11.

In general, three different embodiments of the measuring system 50 previously described are possible.

In a first embodiment (not part of the present invention but described for illustrative purposes), the measuring system 50 comprises the acceleration sensor 52 while the charge variation sensor 54 is absent. In this case, the control unit 56 does not comprise the filtering module 62, therefore the feature extraction module 64 and the classification module 66 function only on the basis of the acceleration signal and the resulting feature parameters.

In a second embodiment (not part of the present invention but described for illustrative purposes), the measuring system 50 comprises the charge variation sensor 54 while the acceleration sensor 52 is absent. In this case, the control unit 56 does not comprise the pre-processing module 60, therefore the feature extraction module 64 and the classification module 66 function only on the basis of the charge variation signal and the resulting feature parameters.

In a third embodiment, the measuring system 50 comprises both the acceleration sensor 52 and the charge variation sensor 54. In this case, the control unit 56 may comprise both the filtering module 62 and the pre-processing module 60, and in general the feature extraction module 64 and the classification module 66 function on the basis of both the acceleration signal and the charge variation signal (therefore in "data-fusion" mode), and the resulting feature parameters.

In particular, in the third embodiment, the feature extraction module 64 can calculate the peak-to-peak distance of the acceleration signal (e.g., after pre-processing by the pre-processing module 60) and the maximum of the charge variation signal (e.g., the filtered charge variation signal outputted by the filtering module 62). Moreover, the classification module 66 can use the DT classifier as a classification algorithm (e.g., with a number of leaves equal to about 6 and a tree size equal to about 11).

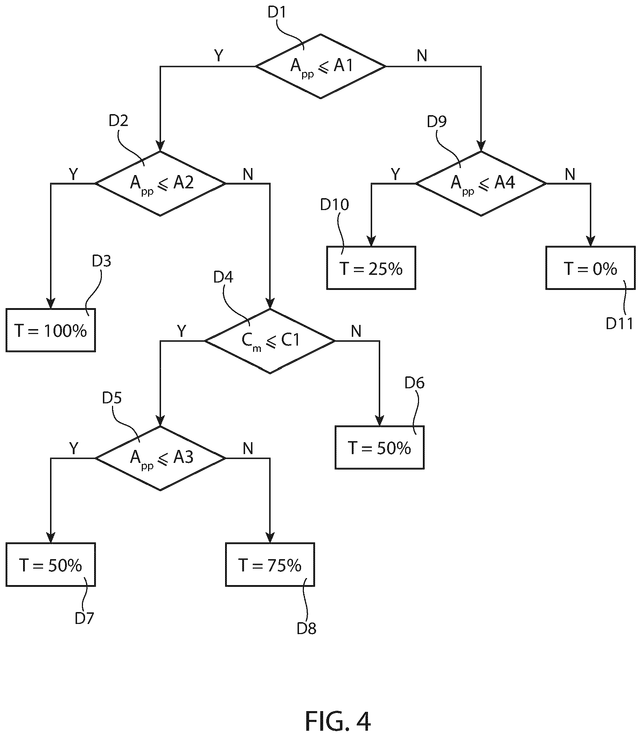

In this case, the DT classifier is based on classification criteria shown in Figure 4.

In particular, in step D1, the DT classifier checks if the peak-to-peak distance of the acceleration signal (also called in the following distance Aₚₚ, for brevity) satisfies a first condition, in detail is lower than, or equal to, a first threshold distance A1. In particular, the first threshold distance A1 is equal to about 0.306 mg, in particular to about 0.306396 mg.

If the first condition is satisfied (exit Y from D1, i.e. the distance Aₚₚ is lower than, or equal to, the first threshold distance A1), in step D2 the DT classifier checks if the distance Aₚₚ satisfies a second condition, in detail is lower than, or equal to, a second threshold distance A2. In particular, the second threshold distance A2 is equal to about 0.141 mg, in particular to about 0.141358 mg.

If the second condition is satisfied (exit Y from D2, i.e. the distance Aₚₚ is lower than, or equal to, the second threshold distance A2), in step D3 the DT classifier determines (i.e., assesses) that the level of the toner 12 in the cartridge 10 corresponds to a first toner level T1, in particular equal to about 100%.

If the second condition is not satisfied (exit N from D2, i.e. the distance Aₚₚ is greater than the second threshold distance A2), in step D4 the DT classifier checks if the maximum of the (filtered) charge variation signal (also called in the following maximum Cₘ, for brevity) satisfies a third condition, in detail is lower than, or equal to, a first threshold maximum C1. In particular, the first threshold maximum C1 is equal to about 1.463 LSB, in particular to about 1.463375 LSB.

If the third condition is not satisfied (exit N from D4, i.e. the maximum Cₘ is greater than the first threshold maximum C1), in step D6 the DT classifier determines that the level of the toner 12 in the cartridge 10 corresponds to a third toner level T3, in particular equal to about 50%.

If the third condition is satisfied (exit Y from D4, i.e. the maximum Cₘ is lower than, or equal to, the first threshold maximum C1), in step D5 the DT classifier checks if the distance Aₚₚ satisfies a fourth condition, in detail is lower than, or equal to, a third threshold distance A3. In particular, the third threshold distance A3 is equal to about 0.193 mg, in particular to about 0.193359 mg.

If the fourth condition is satisfied (exit Y from D5, i.e. the distance Aₚₚ is lower than, or equal to, the third threshold distance A3), in step D7 the DT classifier determines that the level of the toner 12 in the cartridge 10 corresponds to the third toner level T3, in particular equal to about 50%.

If the fourth condition is not satisfied (exit N from D5, i.e. the distance Aₚₚ is greater than the third threshold distance A3), in step D8 the DT classifier determines that the level of the toner 12 in the cartridge 10 corresponds to a second toner level T2, in particular equal to about 75%.

If the first condition is not satisfied (exit N from D1, i.e. the distance Aₚₚ is greater than the first threshold distance A1), in step D9 the DT classifier checks if the distance Aₚₚ satisfies a fifth condition, in detail is lower than, or equal to, a fourth threshold distance A4. In particular, the fourth threshold distance A4 is equal to about 0.460 mg, in particular to about 0.46045 mg.

If the fifth condition is satisfied (exit Y from D9, i.e. the distance Aₚₚ is lower than, or equal to, the fourth threshold distance A4), in step D10 the DT classifier determines that the level of the toner 12 in the cartridge 10 corresponds to a fourth toner level T4, in particular equal to about 25%.

If the fifth condition is not satisfied (exit N from D9, i.e. the distance Aₚₚ is greater than the fourth threshold distance A4), in step D11 the DT classifier determines that the level of the toner 12 in the cartridge 10 corresponds to a fifth toner level T5, in particular equal to about 0%.

Therefore, the classification criteria of Figure 4 allow to classify the level of the toner 12 in the cartridge 10 according to five predefined values, i.e. T1-T5.

In particular, the following relationship exists between the predefined toner values T1-T5: T1>T2>T3>T4>T5.

Moreover, the following relationship exists between the threshold distances A1-A4: A2<A3<A1<A4.

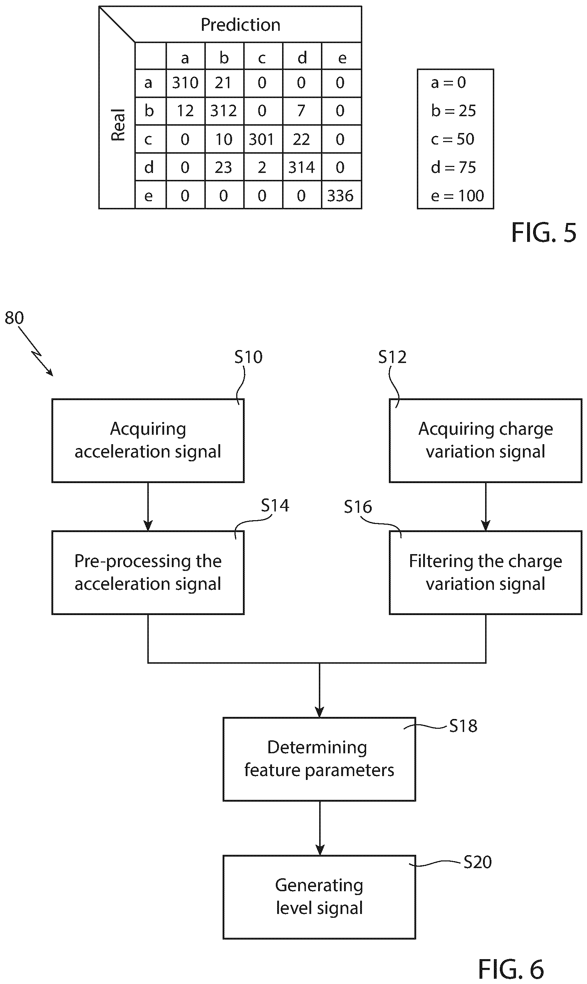

Figure 5 shows an example of a confusion matrix that can be obtained based on the third embodiment and using the classification criteria of Figure 4. In particular, the indexes a-e correspond to the toner levels T5-T1.

As it can be deduced from Figure 5, the use of the data from both the acceleration sensor 52 and the charge variation sensor 54 greatly and surprisingly increases the accuracy of the classification up to about 94.191%. In fact, it has been verified that the acceleration sensor 52 alone has a low accuracy and sensitivity in the evaluation of the difference between the toner levels 50% and 75%, but the charge variation sensor 54 provides additional information that allow to perform this distinction with high accuracy and sensitivity. Thus, the combined use of these two sensors greatly increases the measurement reliability.

Figure 6 shows a measuring method 80 performed by the control unit 56 to detect the level of the toner 12 in the cartridge 10.

At a step S10 of the measuring method 80, the control unit 56 acquires the acceleration signal from the acceleration sensor 52.

At a step S12 of the measuring method 80, the control unit 56 acquires the charge variation signal from the charge variation sensor 54.

Similarly to what has been previously described with reference to the measuring system 50, steps S10 and S12 are performed in combination with each other, so that the measuring method 80 uses both the acceleration signal and the charge variation signal to perform the detection of the level of toner 12 is exemplarily described.

At a step S14 (optional) of the measuring method 80, the control unit 56 pre-processes the acceleration signal, in detail through the pre-processing module 60 previously described and thus calculating the norm of the components of the acceleration signal.

At a step S16 (optional) of the measuring method 80, the control unit 56 filters the charge variation signal, in detail through the filtering module 62 previously described.

At a step S18 of the measuring method 80, the control unit 56 determines the feature parameters on the basis of the acceleration signal (in detail, pre-processed) and the charge variation signal (in detail, filtered), in detail through the feature extraction module 64 previously described.

At a step S20 of the measuring method 80, the control unit 56 generates the level signal on the basis of the feature parameters, in detail through the classification module 66 previously described.

The level signal may be provided to the user, for example through a visual or audible message generated by a user interface (not shown) coupled to the control unit 56 and controlled by the latter, or may be used to control by the control unit 56 one or more functionalities of the cartridge 10 or the printer 40 (or, possibly, of other electronic apparatuses coupled to the control unit 56).

Furthermore, the measuring method 80 is performed by the control unit 56 through a suitable computer program product, stored in the control unit 56 and designed in such a way that, when executed in the control unit 56, the latter becomes configured to perform the measuring method 80.

From an examination of the characteristics of the invention made according to the present invention, the advantages that it affords are evident.

In detail, the measuring system 50 and the measuring method 80 allow the level of toner 12 present in the cartridge 10 of the laser printer 40 to be accurately and precisely detected, in such a way as to provide the user with a reliable indication of the amount of toner 12 still available for printing.

The measuring system 50 comprises elements with high measuring reliability and low cost (from both the financial and energetic point of view), therefore it allows the level of the toner 12 to be measured in a reliable, economical manner and with reduced energy consumption.

In particular, both the measuring channels (i.e. either the acceleration sensor 52 or the charge variation sensor 54) are used in order to maximize measuring accuracy.

In fact, considering for exemplary purposes the number of leaves and branches previously indicated as the size of the classification tree of the DT classifier, it has been verified that the case in which the measuring system 50 comprises the sole acceleration sensor 52 allows an accuracy equal to about 84% to be achieved, while the case in which the measuring system 50 comprises the sole charge variation sensor 54 allows an accuracy equal to about 86% to be achieved. On the other hand, the embodiment of the measuring system 50 which comprise both the acceleration sensor 52 and the charge variation sensor 54 allows an accuracy equal to about 94% to be achieved (i.e., about 8-10% more than the accuracy obtained using only one between the sensors 52 and 54). Furthermore, it has been verified that, when using both measuring channels, the computational complexity (e.g., the complexity of the DT classifier, for example in terms of features used and tree size) decreases with respect to the case of using the sole charge variation sensor 54 and is completely comparable to the case of using the sole acceleration sensor 52, thus also decreasing the overfitting of the classifier; this is clear proof of the correlation between the acceleration signal and the charge variation signal, due to the dependence of both on the level of toner 12 in the cartridge 10. Moreover, when using both the sensors 52 and 54, such high values of accuracy can be achieved also by means of the two previously described features (i.e., Aₚₚ and Cₘ) ; since a reduced number of features suffices for obtaining these high values of accuracy, the computational resources and time/power consumptions are also minimized.

Furthermore, the measuring system 50 is easily integrable into currently known cartridges 10 and does not require significant modifications to the latter.

Finally, it is clear that modifications and variations may be made to the invention described and illustrated herein without thereby departing from the scope of the present invention, as defined in the attached claims.

For example, the different embodiments described may be combined with each other to provide further solutions.

Furthermore, the pre-processing module 60 may be absent, for example because the calculation of the norm is already performed internally to the acceleration sensor 52 and therefore the acceleration signal at the output of the acceleration sensor 52 is already indicative of the norm of the measurements carried out on the measuring axes of the accelerometer. Furthermore, the same calculation of the norm may not be performed either by the pre-processing module 60 or by the acceleration sensor 52, for example because the accelerometer present in the acceleration sensor 52 is of uniaxial type or is placed, with respect to the cartridge 10, in such a way as to have only one axis which is stimulated by the vibrations induced by the cartridge 10. In this case, the feature extraction module 64 may operate directly on the signal measured by the accelerometer, therefore not on the basis of the norm of the measurements.

Furthermore, the filtering module 62 may be absent. In this case, the filtering of the charge variation signal may be performed internally to the charge variation sensor 54 or it may not be performed. In this second case, the feature extraction module 64 may operate directly on the signal measured by the electrode, therefore not on the basis of the filtered signal.

Furthermore, although the feature extraction module 64 previously described is coupled to both the pre-processing module 60 and the filtering module 62 and therefore is configured to determine the feature parameters both on the basis of the acceleration signal and on the basis of the charge variation signal, it becomes however apparent that the feature extraction module 64 may be formed by a first feature extraction module (not shown) coupled only to the pre-processing module 60 and therefore configured to determine first feature parameters only on the basis of the acceleration signal, and by a second feature extraction module (not shown) coupled only to the filtering module 62 and therefore configured to determine second feature parameters only on the basis of the charge variation signal. In this case, the first and the second feature extraction modules are both coupled to the classification module 66, which receives, in use, both the first and the second feature parameters in order to generate the level signal similarly to what has been previously described.

Furthermore, and in a manner not shown, the pre-processing module 60 may also implement a filter configured to filter the acceleration signal in order to remove any noise or select particular frequency components of the acceleration signal. In detail, this filtering may be performed and, following the filtering, the acceleration signal (filtered) may be pre-processed as previously described. For example, this filtering is performed through a further band-pass filter having a lower cut-off frequency comprised between about 0.5 Hz and about 10 Hz and for example equal to about 5 Hz and an upper cut-off frequency comprised between about 50 Hz and about 100 Hz and for example equal to about 80 Hz.

Alternatively, this filtering of the acceleration signal may also be performed externally to the pre-processing module 60 and therefore through a further filtering module (also referred to as acceleration filtering module, not shown) which is coupled to the acceleration sensor 52 to receive from the latter the acceleration signal and is also coupled to the pre-processing module 60 to provide the latter with the acceleration signal which has been filtered and which may be pre-processed as previously described.

## Claims

1. A measuring system (50) for a cartridge (10) for laser printer (40),
the measuring system (50) being configured to be coupled to an external body (14) of the cartridge (10) and comprising:
- an acceleration sensor (52) configured to measure vibrations of the cartridge (10) generated by rotating elements (20, 22, 24) of the cartridge (10) and dependent on a level of toner (12) contained in the cartridge (10); and
- a charge variation sensor (54) configured to measure electrostatic charge variations generated by movements of the toner (12) in the cartridge (10) and dependent on the level of the toner (12) in the cartridge (10),
the measuring system (50) further comprising a control unit (56) configured to:
- receive from the acceleration sensor (52) an acceleration signal indicative of the measured vibrations, and from the charge variation sensor (54) a charge variation signal indicative of the measured electrostatic charge variations;
- determine feature parameters as a function of the acceleration signal and the charge variation signal, the feature parameters comprising a peak-to-peak distance (Aₚₚ) of the acceleration signal and a maximum (Cₘ) of the charge variation signal; and
- generate, on the basis of the feature parameters, a level signal indicative of the level of the toner (12) in the cartridge (10).

2. The measuring system according to claim 1, wherein the control unit (56) comprises:
- a feature extraction module (64) coupled to the acceleration sensor (52) and to the charge variation sensor (54) and configured to determine the feature parameters; and
- a classification module (66) coupled to the feature extraction module (64) and configured to generate the level signal.

3. The measuring system according to claim 1 or 2, wherein the control unit (56) is integrated into one of the acceleration sensor (52) and the charge variation sensor (54) and is operationally coupled to the other of the acceleration sensor (52) and the charge variation sensor (54), or
wherein the control unit (56) is external to the acceleration sensor (52) and the charge variation sensor (54) and is operationally coupled to the acceleration sensor (52) and to the charge variation sensor (54).

4. A cartridge (10) for laser printer (40), comprising an external body (14) and a measuring system (50), according to any of the preceding claims,
the measuring system (50) being coupled to the external body (14).

5. The cartridge according to claim 4, wherein the rotating elements (20, 22, 24) comprise one or more of: a developer roller (20), an OPC drum (22), and a primary charge roller (24), accommodated in the external body (14),
wherein the cartridge (10) further comprises a toner hopper (16) configured to contain the toner (12) and accommodated in the external body (14), and an agitator bar (18) extending into the toner hopper (16) and configured to rotate in the toner hopper (16) in such a way as to move the toner (12) into the toner hopper (16),
wherein the acceleration sensor (52) is at the rotating elements (20, 22, 24) and the charge variation sensor (54) is at the toner hopper (16).

6. A laser printer (40) comprising a cartridge (10) according to claim 4 or 5.

7. A measuring method (80) for measuring a level of toner (12) in a cartridge (10) for laser printer (40),
the measuring method (80) being performed through a measuring system (50) configured to be coupled to an external body (14) of the cartridge (10) and comprising:
- an acceleration sensor (52) configured to measure vibrations of the cartridge (10) generated by rotating elements (20, 22, 24) of the cartridge (10) and dependent on the level of toner (12) in the cartridge (10); and
- a charge variation sensor (54) configured to measure electrostatic charge variations generated by movements of the toner (12) in the cartridge (10) and dependent on the level of the toner (12) in the cartridge (10),
the measuring system (50) further comprising a control unit (56),
the measuring method (80) comprising the steps of:
- receiving (S10, S12), by the control unit (56), from the acceleration sensor (52) an acceleration signal indicative of the measured vibrations, and from the charge variation sensor (54) a charge variation signal indicative of the measured electrostatic charge variations;
- determining (S18), by the control unit (56), feature parameters as a function of the acceleration signal and the charge variation signal, wherein the step of determining (S18) the feature parameters comprises calculating, on the basis of the acceleration signal and the charge variation signal, a peak-to-peak distance (Aₚₚ) of the acceleration signal and a maximum (Cₘ) of the charge variation signal; and
- generating (S20), by the control unit (56) and on the basis of the feature parameters, a level signal indicative of the level of the toner (12) in the cartridge (10).

8. The measuring method according to claim 7, wherein the step of generating (S20) the level signal comprises selecting a value of the level signal among a plurality of predefined values corresponding to a respective plurality of predefined levels of toner (12) in the cartridge (10).

9. The measuring method according to claim 7 or 8, wherein the step of generating (S20) the level signal comprises processing the feature parameters through a classifier, in particular of the decision-tree type.

10. The measuring method according to claim 8 and 9, wherein the plurality of predefined levels of toner (12) in the cartridge (10) comprises a first to a fifth level (T1-T5), wherein the first level is greater than the second level, that is greater than the third level, that is greater than the fourth level, that is greater than the fifth level,
wherein the classifier is of the decision-tree type, and
wherein the step of generating (S20) the level signal comprises:
- checking (D1) if the peak-to-peak distance (Aₚₚ) satisfies a first condition, the first condition being satisfied if the peak-to-peak distance (Aₚₚ) is lower than, or equal to, a first threshold distance (A1);
- if the first condition is satisfied, checking (D2) if the peak-to-peak distance (Aₚₚ) satisfies a second condition, the second condition being satisfied if the peak-to-peak distance (Aₚₚ) is lower than, or equal to, a second threshold distance (A2);
- if the second condition is satisfied, determining (D3) the level signal as corresponding to the first level (T1);
- if the second condition is not satisfied, checking (D4) if the maximum (Cₘ) satisfies a third condition, the third condition being satisfied if the maximum (Cₘ) is lower than, or equal to, a first threshold maximum (C1);
- if the third condition is not satisfied, determining (D6) the level signal as corresponding to the third level (T3);
- if the third condition is satisfied, checking (D5) if the peak-to-peak distance (Aₚₚ) satisfies a fourth condition, the fourth condition being satisfied if the peak-to-peak distance (Aₚₚ) is lower than, or equal to, a third threshold distance (A3);
- if the fourth condition is satisfied, determining (D7) the level signal as corresponding to the third level (T3) ;
- if the fourth condition is not satisfied, determining (D8) the level signal as corresponding to the second level (T2) ;
- if the first condition is not satisfied, checking (D9) if the peak-to-peak distance (Aₚₚ) satisfies a fifth condition, the fifth condition being satisfied if the peak-to-peak distance (Aₚₚ) is lower than, or equal to, a fourth threshold distance (A4);
- if the fifth condition is satisfied, determining (D10) the level signal as corresponding to the fourth level (T4);
- if the fifth condition is not satisfied, determining (D11) the level signal as corresponding to the fifth level (T5),
wherein the second threshold distance (A2) is lower than the third threshold distance (A3), that is lower than the first threshold distance (A1), that is lower than the fourth threshold distance (A4).

11. The measuring method according to claim 10, wherein:
the first threshold distance (A1) is equal to 0.306±0.001 mg;
the second threshold distance (A2) is equal to 0.141±0.001 mg;
the first threshold maximum (C1) is equal to 1.463±0.001 LSB;
the third threshold distance (A3) is equal to 0.193±0.001 mg;
the fourth threshold distance (A4) is equal to 0.460±0.001 mg.

12. The measuring method according to any of claims 7-11, wherein the step of determining (S18) the feature parameters comprises calculating, on the basis of the acceleration signal and the charge variation signal, also one or more of the following features: mean, variance, energy, "zero cross", "peak detector", minimum.

13. The measuring method according to any of claims 7-12, further comprising the step of pre-processing (S14) the acceleration signal by calculating a norm of the acceleration signal, and
wherein the step of determining (S18) the feature parameters comprises determining the feature parameters as a function of the acceleration signal that has been pre-processed.

14. The measuring method according to any of claims 7-13, further comprising the step of filtering (S16) the charge variation signal, and
wherein the step of determining (S18) the feature parameters comprises determining the feature parameters as a function of the charge variation signal that has been filtered.

15. The measuring method according to claim 14, wherein the step of filtering (S16) the charge variation signal comprises using a band-pass filter having a lower cut-off frequency comprised between 0.1 Hz and 1 Hz and an upper cut-off frequency comprised between 5 Hz and 20 Hz.

16. A computer program product, storable in a control unit (56) and designed in such a way that, when executed in the control unit (56), the control unit (56) becomes configured to perform a measuring method (80), according to any of claims 7-15.
